# EUROPÄISCHE PATENTSCHRIFT

(11) **EP 1 409 401 B1**
(45) Veröffentlichungstag und Bekanntmachung des Hinweises auf die Patenterteilung: **15.12.2004**
(21) Anmeldenummer: 02753076.5
(22) Anmeldetag: 02.07.2002
(51) Int. Cl.: C01B 21/14

(54) **VERFAHREN ZUR HERSTELLUNG EINER SALZFREIEN, WAESSRIGEN HYDROXYLAMINLOESUNG**
METHOD FOR PRODUCING AN AQUEOUS HYDROXYLAMINE SOLUTION DEVOID OF SALT
PROCEDE POUR PRODUIRE UNE SOLUTION AQUEUSE D'HYDROXYLAMINE SANS SEL

(30) Priorität: 04.07.2001 DE 10134389
(43) Veröffentlichungstag der Anmeldung: 21.04.2004
(73) Patentinhaber: BASF AKTIENGESELLSCHAFT, 67056 Ludwigshafen (DE)
(72) Erfinder: WOSTBROCK, Karl-Heinz, 67591 Mörstadt (DE); STRÖFER, Eckhard, 68163 Mannheim (DE); WEBER, Markus, 67061 Ludwigshafen (DE); KERTH, Steffen, 67063 Ludwigshafen (DE)
(86) Internationale Anmeldenummer: PCT/EP2002/007273
(87) Internationale Veröffentlichungsnummer: WO 2003/004408

(56) Entgegenhaltungen:
- WO-A-97/22551
- US-A- 6 153 799
- US-B1- 6 235 162

## Beschreibung

Die vorliegende Erfindung betrifft ein Verfahren zur Herstellung einer salzfreien, wässrigen Hydroxylaminlösung durch Umsetzung einer wäßrigen Lösung eines Hydroxylammoniumsalzes mit einer Base unter Erhalt einer Mischung und destillativer Abtrennung einer salzfreien, wässrigen Hydroxylaminlösung aus dieser Mischung, dadurch gekennzeichnet, daß man als Base eine wäßrige Lösung eines Gemischs aus NaOH und KOH im molaren Verhältnis von Na⁺ : K⁺ im Bereich von 70 : 30 bis 95 : 5 und einer Gesamtkonzentration aus Na⁺ und K⁺ im Bereich von 0,1 bis 10 m/m% bezogen auf die Gesamtmenge des Gemischs einsetzt.

Hochreine, konzentrierte, wässrige Hydroxylaminlösungen werden unter anderem in der Elektronikindustrie, z.B. in Verbindung mit anderen Stoffen zum Reinigen von Platinen oder Silizium-Wafern, verwendet. Für die Anwendung in der Elektronikindustrie werden üblicherweise Konzentrationen der Verunreinigungen, insbesondere Metallionen, weit unter 1 ppm, sogenannte "Electronic grade"-Ware, gefordert. Dabei nehmen die Anforderungen an die Reinheit der wäßrigen Hydroxylamin-Lösungen ständig zu.

Hydroxylamin wird großtechnisch als Hydroxylammoniumsalz, üblicherweise als Hydroxylammoniumsulfat, hergestellt. Zur Herstellung salzfreier, wässriger Hydroxylamin-Lösungen wird eine wässrige Lösung eines Hydroxylammoniumsalzes mit einer Base versetzt und eine wässrige Hydroxylamin-Lösung von dem Gemisch üblicherweise durch Destillation abgetrennt, beispielsweise gemäß US-A-5,472,679, WO 97/22551, WO98/57886, DE 1954775.8, WO 99/07637.

Die Destillation von wässrigen, Hydroxylamin enthaltenden Lösungen, selbst im Labormaßstab, wird als eine besonders gefährliche Operation bezeichnet: siehe Roth-Weller: Gefährliche Chemische Reaktionen, Stoffinformationen Hydroxylamin, Seite 3, 1984, 2, Eco-med-Verlag.

Demgemäß erfordert die genannte Destillation einen hohen technischen Aufwand und einen großen Zeitbedarf.

Zudem enthalten wässrige Hydroxylaminlösungen trotz der Destillation aus der Herstellung Verunreinigungen, wie Natriumsulfat oder andere Metallverbindungen in unerwünscht großen Mengen.

Der vorliegenden Erfindung lag daher die Aufgabe zugrunde, ein Verfahren zur Herstellung salzfreier, wässriger Hydroxylamin-Lösungen durch Destillation bereitzustellen, bei dem die wässrigen Hydroxylamin-Lösungen mit weniger Verunreinigungen ohne Erhöhung des technischen Aufwands, des Zeitbedarfs oder eines Sicherheitsrisikos erhalten werden.

Demgemäß wurde das eingangs definierte Verfahren gefunden.

In dem erfindungsgemäßen Verfahren setzt man eine wässrige Lösung eines Hydroxylammonium-Salzes und einer Base ein. Die Lösung kann weitere Stoffe enthalten, die das erfindungsgemäße Verfahren nicht nachteilig beeinflussen, wie Hydroxylamin, oder Stabilisator, wie 1,2-trans-(N,N,N',N'-tetraessigsäure)-Cyclohexandiamin oder dessen Salze, beispielsweise Natrium- oder Ammoniumsalze oder die in WO 97/22551 beschrieben Stabilisatoren.

Als Hydroxylammonium-Salz kommen Salze organischer Säuren, wie Ameisensäure, Essigsäure, vorzugsweise Salze anorganischer Säuren, wie Schwefelsäure, Phosphorsäure, Salzsäure, oder Gemische solcher Salze in Betracht.

Solche Hydroxylammonium-Salze sowie deren Herstellung sind an sich bekannt.

Zur Herstellung der Lösung eines Hydroxylammonium-Salzes und einer Base kann man die Hydroxylammoniumsalze vorteilhaft als wässrige Lösung mit einem Gehalt an Hydroxylammoniumsalz von 5 bis 50 m/m%, insbesondere 26 bis 38 m/m% einsetzen.

Erfindungsgemäß setzt man als Base eine wäßrige Lösung eines Gemischs aus NaOH und KOH im molaren Verhältnis von Na⁺ : K⁺ im Bereich von 70:30 bis 95:5 vorzugsweise 80:20 bis 90:10, insbesondere 84:16 bis 86:14 ein. Dabei kommt eine Gesamtkonzentration aus Na⁺ und K⁺ im Bereich von 0,1 bis 10 m/m%, vorzugsweise 2,0 bis 4,6 insbesondere 4,1 bis 4,3 m/m% bezogen auf die Gesamtmenge des Gemischs in Betracht.

Dieses Gemisch kann weitere Oxide oder Hydroxide der Alkalien, wie Lithiumhydroxid, der Erdalkalien, wie Calciumhydroxid, Strontiumhydroxid, Bariumhydroxid, Ammoniak, Amine, wie Monoamine, Diamine oder Triamine, beispielsweise Methylamin, Dimethylamin, Trimethylamin, Ethylamin, Diethylamin, Triethylamin, Mono-, Di oder Trialkanolamine, wie Diethanolamin und cyclische Amine, wie Pyrrolidin oder Piperidin, sowie Gemische solcher Basen enthalten. Vorteilhaft enthält das Gemisch keine weiteren solcher Verbindungen.

Die Base kann man vorteilhaft als wässrige Lösung einsetzen, vorzugsweise in einer Konzentration von 25 bis 60 m/m%, insbesondere 45 bis 50 m/m%.

Die Menge an Base sollte so gewählt werden, dass das Hydroxylammonium-Salz vollständig oder zumindest zum überwiegenden Teil in freies Hydroxylamin überführt wird. Dies kann kontinuierlich oder diskontinuierlich und bei Temperaturen im Bereich von etwa 10°C bis 120°C erfolgen.

Die in dem erfindungsgemäßen Verfahren eingesetzte wässrige Lösung eines Hydroxylammonium-Salzes und einer Base sollte einen Gehalt an Hydroxylamin von 2 bis 45 m/m%, vorzugsweise 8 bis 12 m/m% aufweisen.

Man kann die Base während der Destillation zugeben. Vorteilhaft kommt eine Zugabe der Base vor der Destillation in Betracht.

Die Zugabe kann kontinuierlich oder diskontinuierlich und bei Temperaturen im Bereich zwischen dem Schmelzpunkt der Hydroxylammoniumsalz-Lösung und deren Siedepunkt, vorteilhaft von etwa 0°C bis 100°C, erfolgen. Je nach der Art und Konzentration des Hydroxylammoniumsalzes und den zur Freisetzung angewandten Reaktionsbedingungen, wie Temperatur, bei der die Umsetzung durchgeführt wird, kann ein Teil des entstandenen Salzes aus dem Basenkation und dem im Hydroxylammoniumsalz vorhandenen Säureanion ausfallen. Gegebenenfalls kann man auch die Lösung abkühlen, um eine größere Menge des Salzes auszufällen. Vorteilhaft sollte man die Reaktionsbedingungen und Konzentrationen so wählen, daß kein Salz ausfällt.

Die Destillation zur Herstellung der salzfreien, wässrigen Hydroxylamin-Lösung können hierfür übliche einstufige oder mehrstufige Apparaturen ("Stripkolonne") in Betracht kommen, wie sie beispielsweise in: Kirk-Othmer, Encyclopedia of Chemical Technology, 3. Ed., Vol. 7, John Wiley & Sons, New York, 1979, Seite 870-881 beschrieben sind, wie Verdampfungsblasen oder Rektifikationskolonnen, beispielsweise Siebbodenkolonnen, Glockenbodenkolonnen, Packungskolonnen oder Füllkörperkolonnen.

Hierbei können einstufige Destillationsblasen, reine Abtriebskolonnen oder Rektifikationskolonnen mit Abtriebs- und Verstärkungsteil verwendet werden.

Als Packung oder Füllkörper kommen an sich übliche Packungen oder Füllkörper in Betracht, wie Raschig-Ringe, Pall-Ringe, Sattelkörper.

Die Kolonnen weisen vorteilhaft eine theoretische Bodenzahl im Bereich von 5 bis 70 auf. Die Zuleitung der Reaktionsmischung, die gegebenenfalls mit einem Stabilisator versetzt sein kann, kann direkt auf den Kopf der Kolonne (Oberteil der Packung oder oberster Boden) erfolgen.

In der Stripkolonne erfolgt die Zerlegung der Lösung derart, daß die Salzfraktion am Sumpf der Kolonne und eine wäßrige Hydroxylaminfraktion in Höhe des Zulaufsbodens oder oberhalb davon, insbesondere über Kopf abgezogen wird. Um dies zu erreichen, ist es bevorzugt, die Lösung durch Einleiten von Wasserdampf und/oder Wasser in den Kolonnensumpf im Gegenstrom zu behandeln. Bei einer Hydroxylamin-Konzentration in der Feed-Lösung im Bereich von 2 bis 45 m/m% beträgt der Mengenstrom an Wasser bzw. Wasserdampf im allgemeinen das 1 bis 8fache, insbesondere 1 bis 5fache der Feedmenge.

Die Temperatur des eingeleiteten Wasserdampfes liegt im allgemeinen im Bereich von 80 bis 180°C. Gegebenenfalls kann der Sumpf der Kolonne zusätzlich beheizt werden. Die im Kopf der Kolonne herrschenden Temperaturen richten sich nach dem Druck, bei dem die Kolonne betrieben wird. Dieser Druck beträgt im allgemeinen 5 bis 300 kPa, vorzugsweise 50 bis 300 kPa. Besonders bevorzugt kann die Kolonne bei einem Druck im Bereich von 50 bis 150kPa betrieben werden. Der Druck bezieht sich dabei auf den Druck am Kopf der Bodenkolonne.

Die Temperaturen im Kopf der Kolonne liegen demgemäß im allgemeinen im Bereich von 80 bis 130°C, vorzugsweise 90 bis 120°C. Die Temperatur des eingeleiteten Wasserdampfes kann deutlich höher liegen, beispielsweise auch bei 150°C. Sie sollte jedoch vorteilhafterweise nicht so hoch sein, daß zu viel Wasser aus der Salzlösung mitverdampft und das Salz im Kolonnensumpf auszufallen beginnt.

Gegebenenfalls kann über dem Zulaufboden oder im Brüdenabzug noch ein Tröpfchenabscheider (Demister) derart installiert werden, daß ein Mitreißen des Salzes durch Tröpfchen verhindert wird.

In einer vorteilhaften Ausführungsform kommt die Herstellung der salzfreien, wässrigen Hydroxylamin-Lösung durch Destillation in einer Bodenkolonne mit mindestens 2 praktischen Böden in Betracht.

Vorteilhaft sollte die Kolonne eine praktische Bodenzahl im Bereich von 10 bis 60 aufweisen. Als Böden kommen Querstromböden wie Siebböden, Ventilböden, Glockenböden und Tunnelböden oder Dualflow-Böden, vorzugsweise Siebböden in Betracht. Die Abstände der Böden voneinander sollte im Bereich von 200 bis 900 mm, vorzugsweise 300 bis 600 mm liegen.

Die Kolonne und Böden können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, daß die Kolonne auch aus speziellen metallischen Werkstoffen, wie Platin, Silber, Zirkon gefertigt werden können, ohne dass eine signifikant erhöhte Zersetzung des Hydroxylamins zu beobachten ist.

Das Rücklaufverhältnis im Verstärkerteil kann man vorteilhaft so einregeln, dass es im Bereich von 0,2 bis 2 liegt.

Erfindungsgemäß befinden sich oberhalb mindestens eines Bodens der Bodenkolonne über den Querschnitt der Kolonne klassische Füllkörper wie Raschig-Ringe, Pallringe, Sattelkörper, moderne Hochleistungs-Füllköper wie der Hiflow-Ring (Firma Rauschert (Steinwiesen, Deutschland)), Super-Raschig-Ringe (Firma Raschig (Ludwigshafen, Deutschland)), Cascade-Mini-Ringe ( Firma Koch-Glitsch (Wichita, USA)), IMTP-Ringe (Firma Norton (Akron, USA) oder Nutter-Ringe (Firma Sulzer Chemtech (Wintherthur, Schweiz)) oder strukturierte Packungen wie Mellapak, Mellapak Plus oder Gewebepackung, vorzugsweise moderne Hochleistungs-Füllkörper. Die Füllkörper sollten gegenüber der zu destillierenden Lösung inert sein, beispielsweise aus Kunststoffen oder speziellen metallischen Werkstoffen vorzugsweise aus perfluorierten Kunststoffen (z.B. TFM, PFA, Teflon).

Die Füllhöhe der Füllkörper zwischen den Böden sollte 50 bis 300 mm, vorzugsweise 100 mm bis 200 mm betragen. Der Abstand zwischen der Füllkörper-Schüttung und dem Boden, oberhalb dessen die Füllkörper-Schüttung installiert ist, liegt zwischen 0 und 600 mm, bevorzugt 100 mm bis 300 mm. Der Abstand zwischen der Füllkörper-Schüttung und dem Boden, unterhalb dessen die Füllkörper-Schüttung installiert ist beträgt, 0 bis 300 mm, bevorzugt 30 bis 100 mm.

Der Druck in der Bodenkolonne beträgt im allgemeinen 5 bis 200 kPa, vorzugsweise 10 bis 110 kPa. Besonders bevorzugt ist es, die Bodenkolonne bei einem Druck im Bereich von 50 bis 110 kPa und insbesondere bei Normaldruck zu betreiben. Der Druck bezieht sich dabei auf den Druck am Kopf der Bodenkolonne.

Die in der Bodenkolonne herrschenden Temperaturen richten sich nach dem Druck, bei dem die Bodenkolonne betrieben wird. Sie liegen im allgemeinen im Bereich von 30 bis 130°C, vorzugsweise 80 bis 130°C.

Die zur Destillation erforderliche Energie kann vorteilhaft durch Einleitung von Wasserdampf im Sumpfbereich erfolgen. Die Temperatur des eingeleiteten Wasserdampfs sollte dabei im allgemeinen im Bereich von 80 bis 180°C liegen.

Die in dem erfindungsgemäßen Verfahren eingesetzte wässrige Lösung eines Hydroxylammonium-Salzes und einer Base kann man auf den Kopf der Bodenkolonne, einen der oberen Böden oder vorteilhaft auf einen der mittleren Böden erfolgen. Gegebenenfalls kann man über dem Zulaufboden noch eine Einrichtung zum Abscheiden mitgerissener Tröpfchen, beispielsweise einen Demister, installieren.

In dem erfindungsgemäßen Verfahren erhält man als Sumpfprodukt eine wässrige Lösung enthaltend ein Salz aus dem Anion des Hydroxylammoniumsalzes und der Kation der Base.

In einer bevorzugten Ausführungsform kann man als Bodenkolonne eine Seitenabzugskolonne einsetzen.

Dabei kommt eine Entnahme der salzfreien, wässrigen Hydroxylaminlösung am Seitenabzug in Betracht. Am Kopf der Kolonne erhält man dann im allgemeinen Wasser.

Die erfindungsgemäß erhaltene salzfreie, wässrige Hydroxylamin-Lösung weist im allgemeinen einen Gehalt an Hydroxylamin von 1 bis 20, vorzugsweise 8 bis 12 m/m% auf.

Die nach dem erfindungsgemäßen Verfahren erhaltene salzfreie, wässrige Hydroxylaminlösung weist eine höhere Reinheit auf als eine nach bekannten Destillationsverfahren erhaltene Lösung. Zudem ist die Verweilzeit der Destillationsmischung in der Kolonne kürzer und somit die thermische Belastung geringer als bei bekannten Verfahren. Ferner wird bei gleicher Kolonnengröße und gleichem Holdup der Kolonne die Kapazität der Kolonne erhöht.

Falls die Kolonne einen Demister enthält, wird dieser gegenüber einem bekannten Verfahren entlastet.

Die erhaltene Hydroxylamin-Lösung kann gewünschtenfalls in einer Destillationskolonne aufkonzentriert werden. Es kann vorteilhaft sein, vor der Destillation einen Stabilisator zuzugeben. Die Hydroxylamin-Lösung kann man vorteilhaft in Höhe von etwa einem Drittel der praktischen Bodenzahl der Destillationskolonne einspeisen. Man erhält über Kopf weitgehend hydroxylamin-freies Wasser und am Sumpf eine Hydroxylamin-Lösung, deren Konzentration von den Destillationsbedingungen abhängig ist.

Im allgemeinen arbeitet man in der Destillationskolonne mit einem Druck im Bereich von 1 bis 200 kPa (0,01 bis 2 bar), vorzugsweise 5 bis 120 kPa (0,05 bis 1,2 bar), besonders bevorzugt 30 bis 110 kPa (0,3 bis1,1 bar), wobei sich der Druck jeweils auf dem Druck am Kopf der Kolonne bezieht. Je höher das Hydroxylamin aufkonzentriert werden soll, umso schonender (niedriger Druck und niedrige Temperatur) muss destilliert werden. Die Destillation kann kontinuierlich oder diskontinuierlich erfolgen.

Die in der Destillationskolonne herrschenden Temperaturen richten sich nach dem Druck, bei dem die Destillationskolonne betrieben wird. Sie liegen im allgemeinen im Bereich von 10 bis 160°C, vorzugsweise 60 bis 120°C.

Das über Kopf der Destillationskolonne abgezogene Wasser bzw. der Brüden kann wieder direkt oder nach Kompression oder Überhitzung als Stripdampf in den Sumpf der im erfindungsgemäßen Verfahren eingesetzten Kolonne zurückgeführt oder als Abwasser der Abwasseraufbereitung zugeführt werden.

Gegebenenfalls kann man über dem Zulaufboden eine Einrichtung zur Abscheidung mitgerissener Tröpfchen, beispielsweise einen Demister, installieren.

Als Destillationskolonne können an sich übliche Kolonnen in an sich bekannter Weise eingesetzt werden. Vorteilhaft kann man als Destillationskolonne eine Bodenkolonne mit mindestens zwei Böden einsetzen.

Vorteilhaft sollte die Kolonne eine praktische Bodenzahl im Bereich von 4 bis 50 aufweisen. Als Böden kommen Querstromböden wie Siebböden, Ventilböden, Glockenböden und Tunnelböden oder Dualflow-Böden, vorzugsweise Siebböden in Betracht. Die Abstände der Böden voneinander sollte im Bereich von 200 bis 900 mm, vorzugsweise 300 bis 600 mm liegen.

Die Kolonne und Böden können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, daß die Kolonne auch aus speziellen metallischen Werkstoffen, wie Platin, Silber, Zirkon, gefertigt werden können, ohne dass eine signifikant erhöhte Zersetzung des Hydroxylamins zu beobachten ist.

Vorteilhaft wird ein Fallfilmverdampfer zum Beheizen des Kolonnensumpfes verwendet, es lassen sich natürlich auch andere übliche Sumpfbeheizer, wie Natur- oder Zwangsumlaufverdampfer, Plattenwärmetauscher etc. einsetzen.

Das Rücklaufverhältnis im Verstärkerteil kann man vorteilhaft so einregeln, dass es im Bereich von 0,2 bis 2 liegt.

Erfindungsgemäß befinden sich oberhalb mindestens eines Bodens der Bodenkolonne über den Querschnitt der Kolonne klassische Füllkörper wie Raschig-Ringe, Pallringe, Sattelkörper, moderne Hochleistungs-Füllköper wie der Hiflow-Ring (Firma Rauschert (Steinwiesen, Deutschland)), Super-Raschig-Ringe (Firma Raschig (Ludwigshafen, Deutschland)), Cascade-Mini-Ringe ( Firma Koch-Glitsch (Wichita, USA)), IMTP-Ringe (Firma Norton (Akron, USA) oder Nutter-Ringe (Firma Sulzer Chemtech (Wintherthur, Schweiz)) oder strukturierte Packungen wie Mellapak, Mellapak Plus oder Gewebepackung, vorzugsweise moderne Füllkörper.

Die Füllkörper sollten gegenüber der zu destillierenden Lösung inert sein, beispielsweise aus Kunststoffen oder speziellen metallischen Werkstoffen vorzugsweise aus perfluorierten Kunststoffen (z.B. TFM, PFA, Teflon).

Die Füllhöhe der Füllkörper zwischen den Böden sollte 50 bis 300 mm, vorzugsweise 100 mm bis 200 mm betragen. Der Abstand zwischen der Füllkörper-Schüttung und dem Boden, oberhalb dessen die Füllkörper-Schüttung installiert ist, liegt zwischen 0 und 600 mm, bevorzugt 100 mm bis 300 mm. Der Abstand zwischen der Füllkörper-Schüttung und dem Boden, unterhalb dessen die Füllkörper-Schüttung installiert ist beträgt, 0 bis 300 mm, bevorzugt 30 bis 100 mm.

Die aufkonzentrierte, wässrige Hydroxylamin-Lösung, die vorzugesweise einen Hydroxylamin-Gehalt im Bereich von 20 bis 60 m/m% aufweist, wird im allgemeinen als Sumpfprodukt erhalten.

### Beispiel:

Eine Hydroxylammoniumsulfatlösung (32 m/m%; ca. 0,6 kg/h) wurde mit Natronlauge/Kalilauge (je 50 m/m%; ca. 1,7 kg/h) in unterschiedlichen Mischungsverhältnissen gemäß Tabelle 1 versetzt, wobei Hydroxylamin und Natrium- und Kaliumsulfat freigesetzt wurde. Aus dieser Salzlösung wurde in einer Laborkolonne eine Hydroxylaminlösung über Kopf mit konstanter Dampfmenge ausgestrippt. Die Lösung wurde auf Na⁺ und K⁺ -Ionen analysiert.

Das Ergebnis ist in nachfolgender Tabelle 1 zusammengefaßt.

**Tabelle 1**

| NaOH/KOH [m/m] | Na⁺ [mg/kg] in Hydroxylamin-Lsg. | K⁺ [mg/kg] in Hydroxylamin-Lsg. |
|---|---|---|
| 100 : 0 | 2,5 | 0 |
| 90 : 10 | 1,7 | 0,2 |
| 80 : 20 | 1 | 0,4 |

Die Verunreinigung der HA-Lösung durch Metallionen wird überraschenderweise durch die Neutralisation mit einer Mischung aus Kalilauge und Natronlauge erniedrigt, so dass die Na⁺-Verunreinigung auf 40% abgesenkt werden kann. Die gewichtsmäßige Summe aus Na⁺- und K⁺-Ionen konnte auf 57% abgesenkt werden.

## Patentansprüche

1. Verfahren zur Herstellung einer salzfreien, wässrigen Hydroxylaminlösung durch Umsetzung einer wäßrigen Lösung eines Hydroxylammoniumsalzes mit einer Base unter Erhalt einer Mischung und destillativer Abtrennung einer salzfreien, wässrigen Hydroxylaminlösung aus dieser Mischung, **dadurch gekennzeichnet, daß** man als Base eine wäßrige Lösung eines Gemischs aus NaOH und KOH im molaren Verhältnis von Na⁺ : K⁺ im Bereich von 70 : 30 bis 95 : 5 und einer Gesamtkonzentration aus Na⁺ und K⁺ im Bereich von 0,1 bis 10 m/m% bezogen auf die Gesamtmenge des Gemischs einsetzt.

2. Verfahren nach Anspruch 1, wobei das Gemisch NaOH und KOH im molaren Verhältnis von Na⁺ : K⁺ im Bereich von 70 : 30 bis 95 : 5 enthält.

3. Verfahren nach Anspruch 1 oder 2, wobei die Gesamtkonzentration aus Na⁺ und K⁺ im Bereich von 2,0 bis 4,6 m/m% bezogen auf die Gesamtmenge des Gemischs beträgt.

4. Verfahren nach den Ansprüchen 1 bis 3, wobei man die Destillation in einer Bodenkolonne mit mindestens 10 praktischen Boden durchführt.

5. Verfahren nach Anspruch 4, wobei sich oberhalb mindestens eines Bodens der Bodenkolonne über den Querschnitt der Kolonne Füllkörper oder strukturierte Packung befinden.

6. Verfahren nach Anspruch 5, wobei die Bodenkolonne 10 bis 80 praktische Böden aufweist.

7. Verfahren nach den Ansprüchen 5 oder 6, wobei man Füllkörper klassische Füllkörper, Hochleistungsfüllkörper oder strukturierte Packungen einsetzt.

8. Verfahren nach den Ansprüchen 4 bis 7, wobei die Temperatur in der Bodenkolonne im Bereich von 80°C bis 130°C liegt.

9. Verfahren nach den Ansprüchen 1 bis 8, wobei man als Sumpfprodukt der Destillation eine wässrige Lösung enthaltend ein Salz aus dem Anion des Hydroxylammoniumsalzes und der Kation der Base erhält.

10. Verfahren nach den Ansprüchen 4 bis 9, wobei die Bodenkolonne eine Seitenabzugskolonne ist.

11. Verfahren nach Anspruch 10, wobei man die salzfreie, wässrige Hydroxylaminlösung am Seitenabzug erhält.

12. Verfahren nach Anspruch 10 oder 11, wobei man als Kopfprodukt Wasser erhält.

## Claims

1. A process for preparing a salt-free aqueous hydroxylamine solution by reacting an aqueous solution of a hydroxylammonium salt with a base to give a mixture and separating from said mixture by distillation a salt-free aqueous hydroxylamine solution, which comprises using as a base an aqueous solution of a mixture of NaOH and KOH in a molar ratio Na⁺:K⁺ in the range from 70:30 to 95:5 and with a total concentration of Na⁺ and K⁺ in the range from 0.1 to 10 m/m% based on the total amount of the mixture.

2. A process as claimed in claim 1, wherein the mixture contains NaOH and KOH in a molar ratio Na⁺:K⁺ in the range from 80:20 to 90:10.

3. A process as claimed in claim 1 or 2, wherein the total concentration of Na⁺ and K⁺ is in the range from 2.0 to 4.6 m/m% based on the total amount of the mixture.

4. A process as claimed in any of claims 1 to 3, wherein the distillation is conducted in a tray column having at least 10 actual trays.

5. A process as claimed in claim 4, wherein random or structured packings are located above at least one tray of the tray column over the cross section of the column.

6. A process as claimed in claim 5, wherein the tray column has from 10 to 80 actual trays.

7. A process as claimed in claim 5 or 6, wherein packing elements used comprise conventional random packings, high-performance random packings or structured packings.

8. A process as claimed in any of claims 4 to 7, wherein the temperature in the tray column is in the range from 80°C to 130°C.

9. A process as claimed in any of claims 1 to 8, wherein the distillation bottom product is an aqueous solution comprising a salt of the anion of the hydroxylammonium salt and the cation of the base.

10. A process as claimed in any of claims 4 to 9, wherein the tray column is a side offtake column.

11. A process as claimed in claim 10, wherein the salt-free aqueous hydroxylamine solution is obtained at the side offtake.

12. A process as claimed in claim 10 or 11, wherein water is obtained as the column top product.

## Revendications

1. Procédé pour la préparation d'une solution aqueuse d'hydroxylamine exempte de sel par la mise en réaction d'une solution aqueuse d'un sel d'hydroxylammonium avec une base pour obtenir un mélange et par la séparation du mélange par distillation d'une solution aqueuse d'hydroxylamine exempte de sel, **caractérisé en ce qu'**on met en oeuvre, comme base, une solution aqueuse d'un mélange d'hydroxyde de sodium et d'hydroxyde de potassium dans le rapport molaire Na⁺ : K⁺ dans la plage de 70 : 30 à 95 : 5 et à une concentration totale de Na⁺ et K⁺ dans la plage de 0,1 à 10 m/m % rapportés à la quantité totale du mélange.

2. Procédé selon la revendication 1, dans lequel le mélange contient de l'hydroxyde de sodium et de l'hydroxyde de potassium dans le rapport molaire Na⁺ : K⁺ dans la plage de 70 : 30 à 95 : 5.

3. Procédé selon la revendication 1 ou 2, dans lequel la concentration totale de Na⁺ et K⁺ se situe dans la plage de 2,0 à 4,6 m/m % rapportés à la quantité totale du mélange.

4. Procédé selon les revendications 1 à 3, dans lequel on effectue la distillation dans une colonne à plateaux comprenant au moins 10 plateaux utiles.

5. Procédé selon la revendication 4, dans lequel, au-dessus d'au moins un plateau de la colonne à plateaux, sur la section transversale de la colonne, on trouve des corps de remplissage ou un garnissage structuré.

6. Procédé selon la revendication 5, dans lequel la colonne à plateaux présente de 10 à 80 plateaux utiles.

7. Procédé selon la revendication 5 ou 6, dans lequel on met en oeuvre, à titre de corps de remplissage, des corps de remplissage classiques, des corps de remplissage à haut rendement ou des garnissages structurés.

8. Procédé selon les revendications 4 à 7, dans lequel la température, dans la colonne à plateaux, se situe dans la plage de 80 °C à 130 °C.

9. Procédé selon les revendications 1 à 8, dans lequel on obtient, à titre de produit de bas de colonne de la distillation, une solution aqueuse contenant un sel constitué par l'anion du sel d'hydroxylammonium et par le cation de la base.

10. Procédé selon les revendications 4 à 9, dans lequel la colonne à plateaux est une colonne à sortie latérale.

11. Procédé selon la revendication 10, dans lequel on obtient la solution aqueuse d'hydroxylamine exempte de sel à la sortie latérale.

12. Procédé selon la revendication 10 ou 11, dans lequel on obtient de l'eau comme produit de tête de colonne.
